# EUROPEAN PATENT SPECIFICATION

(11) **EP 3 623 944 B1**
(45) Date of publication and mention of the grant of the patent: **09.08.2023**
(21) Application number: 19201421.5
(22) Date of filing: 15.02.2011
(51) Int. Cl.: G06F 9/46, G06F 9/50, G06F 9/451, G06F 9/455, G06F 21/62, H04L 9/40

(54) **THIN CLIENT SYSTEM, AND ACCESS CONTROL METHOD AND ACCESS CONTROL PROGRAM FOR THIN CLIENT SYSTEM**
THIN-CLIENT-SYSTEM UND ZUGANGSSTEUERVERFAHREN UND ZUGANGSSTEUERPROGRAMM FÜR THIN-CLIENT-SYSTEM
SYSTÈME DE CLIENT LÉGER ET PROCÉDÉ ET PROGRAMME DE CONTRÔLE D'ACCÈS POUR SYSTÈME DE CLIENT LÉGER

(30) Priority: 30.03.2010 JP 2010077235
(43) Date of publication of application: 18.03.2020
(62) Divisional of application: 11762379.3
(73) Proprietor: NEC Corporation, 108-8001 Tokyo (JP)
(72) Inventor: KIMIZUKA, Masahiko, Tokyo 108-8001 (JP)
(74) Representative: Vossius & Partner Patentanwälte Rechtsanwälte mbB

(56) References cited:
- US-A1- 2008 243 854
- US-A1- 2008 271 015
- US-A1- 2009 328 195

## Description

### BACKGROUND

The present invention relates to a thin client system, as well as an access control method and an access control program for the thin client system.

Recent years have witnessed an increase in the number of business enterprises and the like using a thin client system to reduce system operation and management costs. In a thin client system, functions installed in a client terminal are minimized and resources such as application software and data are managed collectively on a server side. JP-A-2008-187338 (Patent Document 1) discloses a thin client system that controls activation and stoppage of a virtual machine that virtualizes an environment of a client terminal on a server in accordance with a current position of a user.

In this conventional thin client system, the virtual machine on the server can be used whenever the client terminal and the virtual machine are capable of communicating with each other. Hence, in a case where a laptop PC (Personal Computer) that can be carried out of a company office, for example, is used as the client terminal, confidential information can be displayed on a screen of the laptop PC in a public place such as an airport or a railway station. In such cases, the confidential information may be viewed stealthily by over-the-shoulder hacking, for example, and as a result, the information may be leaked. The confidential information may also be leaked if the laptop PC is stolen.

US 2008/0243854 A1 discloses an information processing system with an operated terminal which monitors a connection request from an operating terminal. When a connection request is transmitted from an operating terminal, an access right for a resource being accessed by the operated terminal is re-determined. As a result, the access right for a resource is appropriately maintained. The need for changing access environments for a resource is determined based on information that is acquired from an operating terminal that intends to access the resource, indicating location and type of the operating terminal. Software is automatically installed in an operating terminal for remote connection, and the operating terminal is automatically connected to the operated terminal.

US 2009/0328195 A1 discloses a system to authenticate and load a plurality of boot logic modules in corresponding access protected memory regions of memory, and to maintain the access protections in run-time environments. Access protection may be implemented with access control list policies expressed in terms of page boundaries to distinguish between read, write, and executed access requests.

US 2008/0271015 A1 relates to a virtual machine control and to a method comprising receiving a request for data from a client computer. The method further comprises obtaining an identifier of a virtual machine. The virtual machine identifier is associated with the requested data. The method further comprises providing the virtual machine identifier to the client computer.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The present invention has been designed to solve the problem described above, and an object thereof is to provide a thin client system, as well as an access control method and an access control program for the thin client system, in which security can be heightened. This object is achieved with the features of the claims.

A thin client system as described includes: a reception unit that receives a user ID and terminal information including at least current position information from a client terminal; an extraction unit that extracts policy information relating to a security policy stored in association with the terminal information received by the reception unit on the basis of the terminal information; an allocation unit that allocates resources for virtualizing an environment of the client terminal on the basis of the user ID received by the reception unit; and an access control unit that restricts access to the resources allocated by the allocation unit on the basis of the policy information extracted by the extraction unit.

An access control method for a thin client system as described includes: a reception step of receiving a user ID and terminal information including at least current position information from a client terminal; an extraction step of extracting policy information relating to a security policy stored in association with the terminal information received in the reception step on the basis of the terminal information; an allocation step of allocating resources for virtualizing the client terminal on the basis of the user ID received in the reception step; and a control step of restricting access to the resources allocated in the allocation step on the basis of the policy information extracted in the extraction step.

An access control program as described causes a computer to execute the respective steps included in the access control method described above.

According to the present invention, security can be heightened in a thin client system.

### DESCRIPTION OF THE DRAWINGS

Fig. 1 is a block diagram showing a configuration of a thin client system according to an embodiment;
Fig. 2 is a view showing a data configuration of a client terminal information table;
Fig. 3 is a view showing a data configuration of a policy management table;
Fig. 4 is a view showing a data configuration of a policy information table; and
Fig. 5 is a flowchart illustrating processing procedures executed when access from a client terminal is controlled in the thin client system.

### DETAILED DESCRIPTION

A preferred embodiment of a thin client system as well as an access control method and an access control program for the thin client system according to the present invention will be described below with reference to the attached drawings.

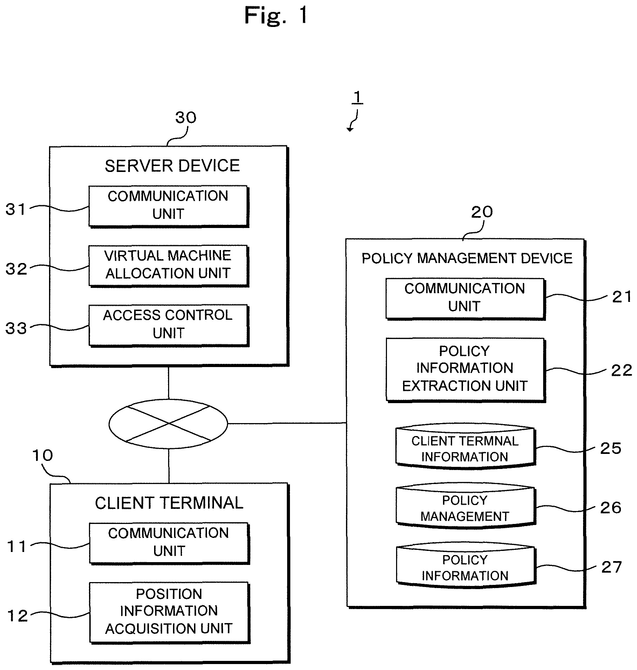

First, referring to Fig. 1, a configuration of a thin client system according to this embodiment will be described. Fig. 1 is a view showing the configuration of the thin client system according to this embodiment in pattern form. As shown in Fig. 1, a thin client system 1 includes a client terminal 10, a policy management device 20, and a server device 30.

The thin client system 1 according to this embodiment is configured to include functions of a known thin client system to be described below, for example. The server device functions to manage an OS (Operating System), application software, various data, and so on of the client terminal collectively. The server device also functions to form a virtual machine that virtualizes an environment of the client terminal for each client terminal, and activates the virtual machine in response to an operation instruction from the client terminal.

The client terminal 10 shown in Fig. 1 includes a communication unit 11 that exchanges data with another device, and a position information acquisition unit 12.

The communication unit 11 transmits a user ID and terminal information to the policy management device 20. The user ID is information for identifying a user operating the client terminal 10. The terminal information is information relating to the client terminal 10, which is registered in advance in a memory. The terminal information includes, for example, IP address information, terminal classification information, data storage permission information, and position information. The terminal classification information is information specifying a terminal classification of the client terminal 10, and corresponds to information indicating a desktop PC or a laptop PC, for example. The data storage permission information is information indicating whether or not data can be stored on the client terminal 10. The position information is information indicating a position of the client terminal 10.

The communication unit 11 receives virtual machine information relating to the virtual machine allocated to the client terminal 10 from the server device 30. On the basis of the virtual machine information, the communication unit 11 transmits a request to access the virtual machine to the server device 30.

The position information acquisition unit 12 obtains the position information included in the terminal information. More specifically, the position information acquisition unit 12 obtains latitude/longitude information corresponding to the current position of the client terminal 10, which is determined by a GPS (Global Positioning System), for example, as the position information. The position information acquisition unit 12 according to this embodiment determines whether the client terminal is in a company office or outside the office on the basis of the latitude/longitude information obtained as the position information and latitude/longitude information indicating a position within the office, and sets information indicating whether the client terminal is positioned inside or outside the office as the position information of the terminal information to be transmitted to the policy management device 20.

The policy management device 20 includes a communication unit 21 that exchanges data with another device, and a policy information extraction unit 22. The policy management device 20 also includes a client terminal information table 25, a policy management table 26, and a policy information table 27.

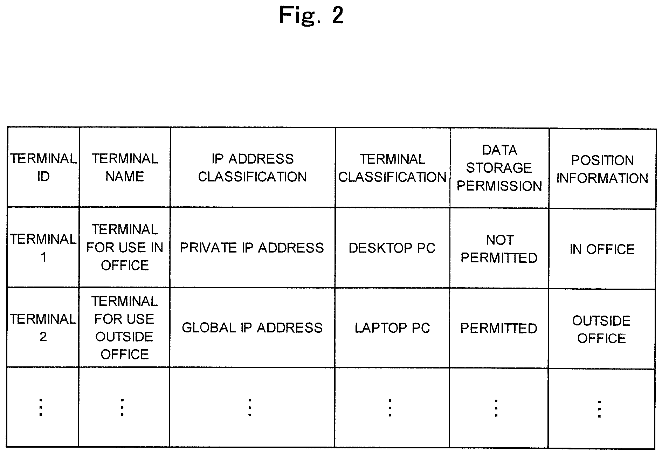

Referring to Fig. 2, a data configuration of the client terminal information table 25 will be described. The client terminal information table 25 includes a record (to be referred to hereafter as a "client terminal information record") for each client terminal 10. The client terminal information record includes, as data items, a terminal ID item, a terminal name item, an IP address classification item, a terminal classification item, a data storage permission item, and a position information item, for example.

Identification information for specifying the client terminal 10 uniquely is stored in the terminal ID item. A name of the client terminal 10 is stored in the terminal name item. An IP address allocated to the client terminal 10 is stored in the IP address classification item. It is possible to differentiate between a private IP address and a global IP address from the content of the IP address. Information specifying the terminal classification of the client terminal 10 is stored in the terminal classification item. Information indicating whether or not data can be stored on the client terminal 10 is stored in the data storage permission item. Information indicating whether the client terminal 10 is positioned inside or outside the company office is stored in the position information item.

The information stored respectively in the IP address classification item, terminal classification item, data storage permission item, and position information item included in the client terminal information record is registered in advance as the terminal information of the client terminal 10.

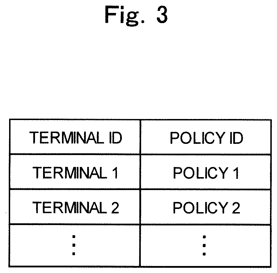

Referring to Fig. 3, a data configuration of the policy management table 26 will be described. The policy management table 26 includes a record (to be referred to hereafter as a "policy management record") for each client terminal 10. The policy management record includes, as data items, a terminal ID item and a policy ID item, for example. Identification information uniquely specifying the client terminal 10 is stored in the terminal ID item. Identification information uniquely specifying policy information relating to a security policy applied to the virtual machine is stored in the policy ID item.

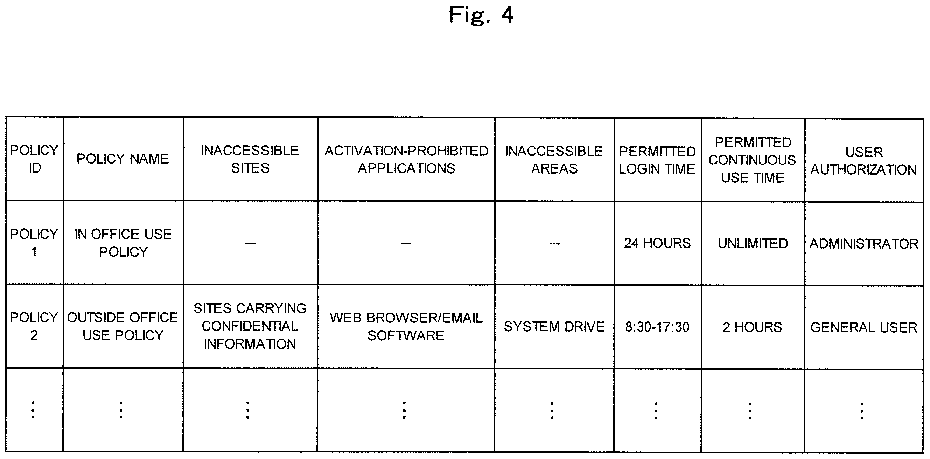

Referring to Fig. 4, a data configuration of the policy information table 27 will be described. The policy information table 27 includes a record (to be referred to hereafter as a "policy information record") for each set of policy information. The policy information record includes, as data items, a policy ID item, a policy name item, an inaccessible site item, an activation-prohibited application item, an inaccessible area item, a permitted login time item, a permitted continuous use time item, and a user authorization item, for example.

Identification information uniquely specifying the policy information is stored in the policy ID item. A name of the policy information is stored in the policy name item. Information specifying access-restricted websites is stored in the inaccessible site item. Information specifying activation-restricted applications is stored in the activation-prohibited application item. Information specifying access-restricted drives, folders, and files is stored in the inaccessible area item. Information specifying a permitted login time span is stored in the permitted login time item. Information specifying a permitted continuous use time is stored in the permitted continuous use time item. Information specifying authorization applied to a user, for example administrator authorization or general user authorization, is stored in the user authorization item.

The communication unit 21 of the policy management device 20 shown in Fig. 1 receives the user ID and terminal information transmitted by the client terminal 10. The communication unit 21 then transmits the user ID and policy information of the client terminal 10 to the server device 30.

The policy information extraction unit 22 extracts the policy information on the basis of the terminal information received from the client terminal 10. This will now be described more specifically. First, the policy information extraction unit 22 extracts the client terminal information record corresponding to the terminal information from the client terminal information table 25. Next, the policy information extraction unit 22 extracts the policy management record corresponding to the terminal ID included in the client terminal information record from the policy management table 26. Next, the policy information extraction unit 22 extracts the policy information corresponding to the policy ID included in the policy management record from the policy information table 27.

The server device 30 includes a communication unit 31 that exchanges data with another device, a virtual machine allocation unit 32, and an access control unit 33.

The communication unit 31 receives the user ID and policy information of the client terminal 10, transmitted by the policy management device 20. The communication unit 31 then transmits the virtual machine information corresponding to the virtual machine allocated to the client terminal 10 to the client terminal 10.

The virtual machine allocation unit 32 allocates resources required to virtualize the environment of the client terminal 10 on the basis of the user ID of the client terminal 10, received from the policy management device 20. As a result, a virtual machine is formed for each client terminal 10 on the server device 30. The resources include, for example, a memory area, an OS, application software, various data, and so on.

The access control unit 33 controls access from the client terminal 10 via the virtual machine in accordance with the policy information of the client terminal 10, received from the policy management device 20. For example, when the policy ID of the policy information is "Policy 2", as shown in Fig. 4, the client terminal 10 is prohibiting from accessing "sites carrying confidential information", prohibited from activating a web browser and email software, and prohibited from accessing a "system drive". Further, the login time of the client terminal 10 is limited to "8:30 to 17:30", continuous use is limited to "2 hours", and user authorization is limited to "general user" authorization.

Here, the policy management device 20 and the server device 30 are physically constituted by a CPU (Central Processing Unit), a storage device, and an input/output interface, for example. The storage device includes, for example, a ROM (Read Only Memory) or an HDD (Hard Disk Drive) that stores programs and data used for processing by the CPU, a RAM (Random Access Memory) mainly used as a working area for various control processing, and so on. These elements are connected to each other by a bus. The CPU can realize the functions of the respective units of the policy management device 20 and the server device 30 by executing a program stored in the ROM and processing messages received via the input/output interface and data expanded in the RAM.

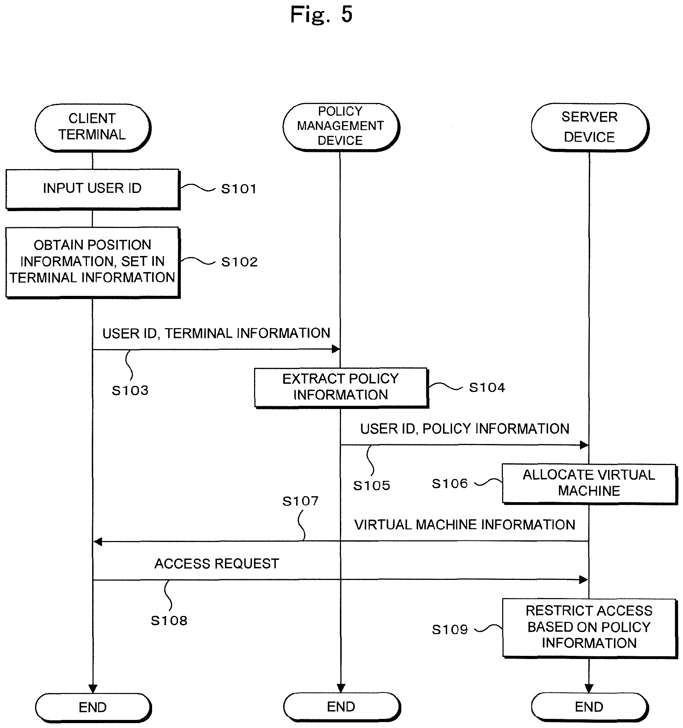

Next, referring to Fig. 5, an operation of the thin client system 1 will be described. Fig. 5 is a flowchart illustrating processing procedures executed when access from the client terminal 10 is controlled in the thin client system 1.

First, a user of the thin client system 1 inputs a user ID via an input device of the client terminal 10 (Step S101).

Next, the position information acquisition unit 12 of the client terminal 10 obtains the position information from the GPS, determines on the basis of the obtained position information whether the client terminal 10 is positioned inside or outside the company office, and sets a determination result as the position information of the terminal information read from the memory (Step S102).

Next, the communication unit 11 of the client terminal 10 transmits the user ID input in Step S101 and the terminal information in which the position information was set in Step S102 to the policy management device 20 (Step S103). As a result, the communication unit 21 of the policy management device 20 receives the user ID and the terminal information.

Next, the policy information extraction unit 22 of the policy management device 20 extracts the policy information on the basis of the terminal information received from the client terminal 10 (Step S104).

Next, the communication unit 21 of the policy management device 20 transmits the user ID received from the client terminal 10 and the policy information extracted in Step S104 to the server device 30 (Step S105). As a result, the communication unit 31 of the server device 30 receives the user ID and the policy information.

Next, the virtual machine allocation unit 32 of the server device 30 allocates a virtual machine virtualizing the environment of the client terminal 10 to the server device 30 on the basis of the user ID of the client terminal 10, received from the policy management device 20 (Step S106).

Next, the communication unit 31 of the server device 30 transmits the virtual machine information of the client terminal 10 to the client terminal 10 (Step S107). As a result, the communication unit 11 of the client terminal 10 receives the virtual machine information.

Next, the communication unit 11 of the client terminal 10 transmits a request to access the virtual machine to the server device 30 on the basis of the virtual machine information received from the server device 30 (Step S108). As a result, the communication unit 31 of the server device 30 receives the access request.

Next, the access control unit 33 of the server device 30 restricts access from the client terminal 10 via the virtual machine on the basis of the policy information received from the policy management device 20 (Step S109).

With the thin client system 1 according to this embodiment, as described above, a security policy stipulating processing that can be executed on the virtual machine can be determined and applied in accordance with use conditions such as the use location, use time, and terminal classification of the client terminal 10, and therefore security in the thin client system can be heightened.

### [Modified Examples]

Note that the embodiment described above is merely an illustrative example, and is not intended to exclude various amendments and technical applications not disclosed in the embodiment. In other words, the present invention may be implemented after undergoing various amendments within a scope of the disclosure.

For example, the embodiment described above includes the policy management device 20 and the server device 30 but is not limited thereto. For example, the respective functions of the policy management device 20 may be added to the server device 30 so that the policy management device 20 can be omitted. Further, the respective functions of the policy management device 20 and the server device 30 may be distributed appropriately over a plurality of devices so that the plurality of devices are caused to function as a group in a similar manner to the policy management device 20 and the server device 30 described above.

Furthermore, in the above embodiment, the policy management device 20 includes the client terminal information table 25, the policy management table 26, and the policy information table 27 but is not limited thereto. For example, the client terminal information table 25 and the policy management table 26 may be combined and managed as a single table, or all of the client terminal information table 25, the policy management table 26, and the policy information table 27 may be combined and managed as a single table. Alternatively, the data configurations of the respective tables may be further compartmentalized such that the data are managed on four or more tables.

Further, in the above embodiment, the IP address information, terminal classification information, data storage permission information, and position information are used as the terminal information employed to determine the policy information, but the present invention is not limited thereto as long as at least the position information is included in the terminal information employed to determine the policy information, for example.

The thin client system and the access control method and access control program for the thin client system according to the present invention can be used to heighten security.

- 1: thin client system
- 10: client terminal
- 11: communication unit
- 12: position information acquisition unit
- 20: policy management device
- 21: communication unit
- 22: policy information extraction unit
- 25: client terminal information table
- 26: policy management table
- 27: policy information table
- 30: server device
- 31: communication unit
- 32: virtual machine allocation unit
- 33: access control unit

## Claims

1. A thin client system comprising:
(a) a server device adapted
(a1) to allocate resources to form a virtual machine, and
(a2) to restrict operation on the virtual machine based on a policy information, the operation being instructed from a client terminal,
(b) a client terminal adapted to connect to the virtual machine and to instruct operation on the virtual machine, and
(c) a policy management device,
wherein
(d) the policy management device is adapted to receive terminal information including current position information of the client terminal and a user ID, the user ID being information for identifying a user operating the client terminal, from the client terminal,
(e) the current position information of the client terminal being its latitude/longitude information,
(f) the policy management device is adapted to extract policy information based on the terminal information, and
(g) a virtual machine is formed for the client terminal on the server device,
(h) the server device is adapted to receive the user ID and policy information of the client terminal,
(i) the server device is adapted to control access from the client terminal via the virtual machine in accordance with the policy information of the client terminal received from the policy management device related to at least one of (i) accessing sites carrying confidential information, (ii) activating a web browser and email software, (iii) limiting the login time of the client terminal, (iv) limiting the client terminal's continuous time use, (v) limiting user authorization.

2. The thin client system according to claim 1,
wherein
the server device is adapted to receive the user ID from the policy management device, and
the server device is adapted to form the virtual machine on the basis of the user ID.

3. The thin client system according to claim 1 or 2,
wherein
the operation is to access a predetermined part of the resource of the server device.

4. The thin client system according to claim 1, 2, or 3,
wherein
the operation is to access a predetermined website, to start a predetermined software, or to use an administrator authorization.

5. The thin client system according to any one of claims 1 to 4,
wherein
the policy information is selected using the current position information.

6. The thin client system according to any one of claims 1 to 5,
wherein
the policy information is selected using terminal classification information included in the terminal information,
wherein the terminal classification information is information specifying a terminal classification of the client terminal, and corresponds to information indicating a desktop PC or a laptop PC.

7. The thin client system according to any one of claims 1 to 6,
wherein
the policy information includes first time information relating to period of time in which the client terminal is permitted to connect to the virtual machine.

8. The thin client system according to any one of claims 1 to 7,
wherein
the policy information includes second time information relating to a continuous use time during which the client terminal is permitted to continuously connect to the virtual machine.

9. An access restriction method for a thin client system,
the method comprising the following steps:
(a) receiving terminal information including current position information of a client terminal and a user ID, the user ID being information for identifying a user operating the client terminal;
(b) the current position information of the client terminal being its latitude/longitude information,
(c) extracting policy information based on the terminal information;
(d) forming a virtual machine for the client terminal on a server device by allocating resources, and restricting operation on the virtual machine based on policy information, the virtual machine being instructed with operation by the client terminal;
(e) wherein the server device is adapted to receive the user ID and the policy information of the client terminal; and
(f) controlling access from the client terminal via the virtual machine in accordance with the policy information of the client terminal received from the policy management device related to at least one of (i) accessing sites carrying confidential information, (ii) activating a web browser and email software, (iii) limiting the login time of the client terminal, (iv) limiting the client terminal's continuous time use, (v) limiting user authorization,
wherein a policy management devices carries out steps (a) and (c) and the server device carries out steps (d) and (f).

10. A computer-readable medium comprising instructions that, when executed on a computer, cause the computer to carry out the access restriction method according to claim 9.

## Patentansprüche

1. Thin-Client-System, das aufweist:
(a) eine Servervorrichtung, die eingerichtet ist:
(a1) Ressourcen zuzuweisen, um eine virtuelle Maschine zu bilden, und
(a2) den Betrieb auf der virtuellen Maschine basierend auf einer Richtlinieninformation zu beschränken, wobei der Betrieb von einem Client-Endgerät angewiesen wird,
(b) ein Client-Endgerät, das eingerichtet ist, eine Verbindung mit der virtuellen Maschine herzustellen und den Betrieb auf der virtuellen Maschine anzuweisen, und
(c) eine Richtlinienverwaltungsvorrichtung,
wobei
(d) die Richtlinienverwaltungsvorrichtung eingerichtet ist, Endgerätinformationen, die aktuelle Positionsinformationen des Client-Endgeräts und eine Benutzer-ID enthalten, wobei die Benutzer-ID Informationen zum Identifizieren eines Benutzers ist, der das Client-Endgerät betreibt, vom Client-Endgerät zu empfangen,
(e) wobei die aktuellen Positionsinformationen des Client-Endgeräts dessen Breiten-/Längengradinformationen sind,
(f) die Richtlinienverwaltungsvorrichtung eingerichtet ist, Richtlinieninformationen basierend auf den Endgeräteinformationen zu extrahieren, und
(g) eine virtuelle Maschine für das Client-Endgerät auf der Servervorrichtung gebildet wird,
(h) die Servervorrichtung eingerichtet ist, die Benutzer-ID und Richtlinieninformationen des Client-Endgeräts zu empfangen,
(i) die Servervorrichtung eingerichtet ist, den Zugriff vom Client-Endgerät über die virtuelle Maschine gemäß den von der Richtlinienverwaltungsvorrichtung empfangenen Richtlinieninformationen des Client-Endgeräts zu steuern, die sich auf mindestens eines beziehen von: (i) Zugreifen auf Sites, die vertrauliche Informationen führen, (ii) Aktivieren eines Webbrowsers und einer E-Mail-Software, (iii) Begrenzen der Anmeldezeit des Client-Endgeräts, (iv) Begrenzen der kontinuierlichen Zeitnutzung des Client-Endgeräts, (v) Begrenzen einer Benutzerautorisierung.

2. Thin-Client-System nach Anspruch 1,
wobei
die Servervorrichtung eingerichtet ist, die Benutzer-ID von der Richtlinienverwaltungsvorrichtung zu empfangen, und
die Servervorrichtung eingerichtet ist, die virtuelle Maschine auf der Grundlage der Benutzer-ID zu bilden.

3. Thin-Client-System nach Anspruch 1 oder 2,
wobei
der Betrieb darin besteht, auf einen vorbestimmten Teil der Ressource der Servervorrichtung zuzugreifen.

4. Thin-Client-System nach Anspruch 1, 2 oder 3,
wobei
der Betrieb darin besteht, auf eine vorbestimmte Website zuzugreifen, eine vorbestimmte Software zu starten oder eine Administratorberechtigung zu verwenden.

5. Thin-Client-System nach einem der Ansprüche 1 bis 4,
wobei
die Richtlinieninformationen unter Verwendung der aktuellen Positionsinformationen ausgewählt werden.

6. Thin-Client-System nach einem der Ansprüche 1 bis 5,
wobei
die Richtlinieninformationen unter Verwendung von in den Endgeräteinformationen enthaltenen Endgeräte-Klassifizierungsinformationen ausgewählt werden,
wobei die Endgeräte-Klassifizierungsinformationen Informationen sind, die eine Endgeräteklassifizierung des Client-Endgeräts spezifizieren, und Informationen entsprechen, die einen Desktop-PC oder einen Laptop-PC anzeigen.

7. Thin-Client-System nach einem der Ansprüche 1 bis 6,
wobei
die Richtlinieninformationen erste Zeitinformationen enthalten, die sich auf eine Zeitspanne beziehen, in der es dem Client-Endgerät erlaubt ist, sich mit der virtuellen Maschine zu verbinden.

8. Thin-Client-System nach einem der Ansprüche 1 bis 7,
wobei
die Richtlinieninformationen zweite Zeitinformationen enthalten, die sich auf eine kontinuierliche Nutzungszeit beziehen, während der es dem Client-Endgerät erlaubt ist, sich kontinuierlich mit der virtuellen Maschine zu verbinden.

9. Zugriffsbeschränkungsverfahren für ein Thin-Client-System,
wobei das Verfahren die folgenden Schritte aufweist:
(a) Empfangen von Endgerätinformationen, die aktuelle Positionsinformationen eines Client-Endgeräts und eine Benutzer-ID enthalten, wobei die Benutzer-ID Informationen zur Identifizierung eines Benutzers ist, der das Client-Endgerät betreibt,
(b) wobei die aktuellen Positionsinformationen des Client-Endgeräts dessen Breiten-/Längengradinformationen sind,
(c) Extrahieren von Richtlinieninformationen basierend auf den Endgerätinformationen;
(d) Bilden einer virtuellen Maschine für das Client-Endgerät auf einer Servervorrichtung durch Zuweisen von Ressourcen und Einschränken des Betriebs auf der virtuellen Maschine basierend auf Richtlinieninformationen, wobei die virtuelle Maschine mit dem Betrieb durch das Client-Endgerät beauftragt wird;
(e) wobei die Server-Vorrichtung eingerichtet ist, die Benutzer-ID und die Richtlinieninformation des Client-Endgeräts zu empfangen; und
(f) Steuern des Zugriffs vom Client-Endgerät über die virtuelle Maschine gemäß den von der Richtlinienverwaltungsvorrichtung empfangenen Richtlinieninformationen des Client-Endgeräts, die sich auf mindestens eines beziehen von: (i) Zugreifen auf Sites, die vertrauliche Informationen führen, (ii) Aktivieren eines Webbrowsers und einer E-Mail-Software, (iii) Begrenzen der Anmeldezeit des Client-Endgeräts, (iv) Begrenzen der kontinuierlichen Zeitnutzung des Client-Endgeräts, (v) Begrenzen der Benutzerautorisierung, wobei eine Richtlinienverwaltungsvorrichtung die Schritte (a) und (c) ausführt und die Servervorrichtung die Schritte (d) und (f) ausführt.

10. Computerlesbares Medium, das Anweisungen aufweist, die, wenn sie auf einem Computer ausgeführt werden, den Computer veranlassen, das Zugriffsbeschränkungsverfahren nach Anspruch 9 auszuführen.

## Revendications

1. Système client léger, comprenant :
(a) un dispositif serveur prévu
(a1) pour allouer des ressources afin de former une machine virtuelle, et
(a2) pour limiter une opération sur la machine virtuelle sur la base d'informations de règles, l'opération étant commandée depuis un terminal client,
(b) un terminal client prévu pour se connecter à la machine virtuelle et pour commander l'opération sur la machine virtuelle, et
(c) un dispositif de gestion de règles,
où
(d) le dispositif de gestion de règles est prévu pour recevoir des informations de terminal comprenant une information de position actuelle du terminal client et un ID d'utilisateur, l'ID d'utilisateur étant une information pour l'identification d'un utilisateur exploitant le terminal client, en provenance du terminal client,
(e) l'information de position actuelle du terminal client étant une information de latitude/longitude de celui-ci,
(f) le dispositif de gestion de règles est prévu pour extraire des informations de règles sur la base des informations de terminal, et
(g) une machine virtuelle est formée pour le terminal client sur le dispositif serveur,
(h) le dispositif serveur est prévu pour recevoir l'ID d'utilisateur et les informations de règles du terminal client,
(i) le dispositif serveur est prévu pour commander l'accès depuis le terminal client via la machine virtuelle en fonction des informations de règles du terminal client reçues du dispositif de gestion de règles relativement à au moins une des actions suivantes : (i) accès à des sites porteurs d'informations confidentielles, (ii) activation d'un navigateur web et d'un logiciel de messagerie électronique, (iii) limitation du temps de connexion du terminal client, (iv) limitation de l'utilisation continue du temps du terminal client, (v) limitation de l'autorisation d'utilisateur.

2. Système client léger selon la revendication 1,
où
le dispositif serveur est prévu pour recevoir l'ID d'utilisateur du dispositif de gestion de règles, et
le dispositif serveur est prévu pour former la machine virtuelle sur la base de l'ID d'utilisateur.

3. Système client léger selon la revendication 1 ou la revendication 2,
où
l'opération est l'accès à une partie définie de la ressource du dispositif serveur.

4. Système client léger selon la revendication 1, la revendication 2 ou la revendication 3,
où
l'opération est l'accès à un site web défini, le lancement d'un logiciel défini, ou l'utilisation d'une autorisation d'administrateur.

5. Système client léger selon l'une des revendications 1 à 4,
où
les informations de règles sont sélectionnées au moyen de l'information de position actuelle.

6. Système client léger selon l'une des revendications 1 à 5,
où
les informations de règles sont sélectionnées au moyen d'une information de classification de terminal comprise dans les informations de terminal,
l'information de classification de terminal étant une information spécifient une classification du terminal client, et correspondant à une information indiquant un PC de bureau ou un PC portable.

7. Système client léger selon l'une des revendications 1 à 6,
où
les informations de règles comprennent une première information temporelle relative à la période pendant laquelle le terminal client est autorisé à se connecter à la machine virtuelle.

8. Système client léger selon l'une des revendications 1 à 7,
où
les informations de règles comprennent une deuxième information temporelle relative à une utilisation continue du temps pendant laquelle le terminal client est autorisé à se connecter de manière continue à la machine virtuelle.

9. Procédé de restriction d'accès pour un système client léger,
ledit procédé comprenant les étapes suivantes :
(a) réception d'informations de terminal comprenant une information de position actuelle du terminal client et un ID d'utilisateur, l'ID d'utilisateur étant une information pour l'identification d'un utilisateur exploitant le terminal client ;
(b) l'information de position actuelle du terminal client étant une information de latitude/longitude de celui-ci,
(c) extraction d'informations de règles sur la base des informations de terminal ;
(d) formation d'une machine virtuelle pour le terminal client sur un dispositif serveur par allocation de ressources, et restriction d'un opération sur la machine virtuelle sur la base des informations de règles, la machine virtuelle étant instruite de l'opération par le terminal client ;
(e) le dispositif serveur étant prévu pour recevoir l'ID d'utilisateur et les informations de règles du terminal client ; et
(f) commande d'accès depuis le terminal client via la machine virtuelle en fonction des informations de règles du terminal client reçues du dispositif de gestion de règles relativement à au moins une des actions suivantes : (i) accès à des sites porteurs d'informations confidentielles, (ii) activation d'un navigateur web et d'un logiciel de messagerie électronique, (iii) limitation du temps de connexion du terminal client, (iv) limitation de l'utilisation continue du temps du terminal client, (v) limitation de l'autorisation d'utilisateur, un dispositif de gestion de règles exécutant les étapes (a) et (c) et le dispositif serveur exécutant les étapes (d) et (f).

10. Support d'enregistrement lisible par ordinateur comprenant des instructions dont l'exécution sur un ordinateur entraîne la mise en oeuvre par ledit ordinateur du procédé de restriction d'accès selon la revendication 9.
